# EUROPEAN PATENT SPECIFICATION

(11) **EP 4 522 688 B1**
(45) Date of publication and mention of the grant of the patent: **18.11.2026**
(21) Application number: 23725228.3
(22) Date of filing: 08.05.2023
(51) Int. Cl.: C08L 23/12

(54) **RECYCLATE BASED THERMOFORMING COMPOSITION**
RECYCLAT-BASIERTE THERMOFORM-ZUSAMMENSETZUNG
COMPOSITION DE THERMOFORMAGE À BASE DE RECYCLATS

(30) Priority: 09.05.2022 EP 22172300
(43) Date of publication of application: 19.03.2025
(73) Proprietor: Borealis GmbH, 1020 Vienna (AT)
(72) Inventor: LIU, Yi, 4021 Linz (AT); KAHLEN, Susanne Margarete, 4021 Linz (AT); FREUD, Paul, 4040 Linz (AT); FISCHER, Jörg, 4040 Linz (AT); MAGER, Moritz, 4040 Linz (AT); LANG, Reinhold W., 4040 Linz (AT)
(74) Representative: Maiwald GmbH
(86) International application number: PCT/EP2023/062141
(87) International publication number: WO 2023/217709

(56) References cited:
- EP-A1- 3 936 565
- WO-A1-2020/070176
- WO-A1-2021/032458
- WO-A1-2021/144404

## Description

### Field of Invention

The present invention concerns upgraded polypropylene polyethylene compositions suitable for thermoforming.

### Background

Mixtures of polypropylene and polyethylene such as found in commercially available recyclates are characterized by limited miscibility. When processing such mixtures into final products, the mechanical and optical properties limit the possible applications to non-demanding ultra-low-cost applications, i.e. not an application such as demanding thermoforming. Particularly, the temperature stability of recyclates is usually inappropriate. The attempt has been made to address those issues at least in part by super-complex methods such as described in KR10-2184015 using calcium carbonate and special additives. It is also known from WO20190224129 that a recycled component A, (most) preferably with a MFR of 8 to 12 g/10min can be blended with a virgin polypropylene component B having a (most) preferred MFR₂ of 0.3 to 0.5 g/10min. Component B can be a random propylene copolymer. However further compositions addressing the needs such as flowability, stiffness, impact strength, and heat distortion temperature as well as vicat in an even better way are required. There is particularly a need for having high heat distortion temperature and high VICAT for given CRYSTEX C2(CF) and also CRYSTEX IV(SF) values.

### Summary of the Invention

The present invention provides
a polypropylene-polyethylene composition having
   - a melt flow rate MFR2 (230°C, ISO1133) of 1.5 to 4.0 g/10min, and
   - a tensile modulus of at least 1300 MPa, (measured according to ISO 527-2); and
   - a crystalline fraction (CF) measured according to Crystex analysis as described in the specification, present in an amount in the range from 90.8 to 93.5 wt.-% with respect to the total weight of the polypropylene-polyethylene composition; and
   - a soluble fraction (SF) measured according to Crystex analysis as described in the specification, present in an amount in the range from 6.5 to 9.2 wt.-% with respect to the total weight of the polypropylene-polyethylene composition; and
   - an intrinsic viscosity of the crystalline fraction [IV(CF)], measured according to Crystex analysis as described in the specification, in the range from 2.3 to 2.9 dl/g; and
   - an intrinsic viscosity of the soluble fraction [IV(SF)], measured according to Crystex analysis as described in the specification of 1.80 dl/g to 2.40 dl/g; and
   - a content of units derived from ethylene in the crystalline fraction [C2(CF)] measured according to Crystex analysis as described in the specification in the range of 3.0 to 4.8 wt.%,
whereby said polypropylene-polyethylene composition contains a recyclate fraction.

The present invention further provides as set forth in claim 11
a process of blending for obtaining a polypropylene-polyethylene composition
a) 39 to 70 wt.-%, preferably 49 to 70 wt.-% of a recycled polypropylene-polyethylene blend (A) having
   - a crystalline fraction (CF) measured according to Crystex analysis as described in the specification, present in an amount in the range from 89.0 to 92.0 wt.-% with respect to the total weight of the recycled polypropylene-polyethylene blend (A); and
   - a soluble fraction (SF) measured according to Crystex analysis as described in the specification, present in an amount in the range from 8.0 to 11.0 wt.-% with respect to the total weight of the recycled polypropylene-polyethylene blend (A); and
   - an intrinsic viscosity of the crystalline fraction [IV(CF)], measured according to Crystex analysis as described in the specification, in the range from 1.50 to 1.80 dl/g; and
   - an intrinsic viscosity of the soluble fraction [IV(SF)], measured according to Crystex analysis as described in the specification of 0.80 dl/g to 1.80 dl/g; and
   - a content of units derived from ethylene in the crystalline fraction [C2(CF)] measured according to Crystex analysis as described in the specification in the range of 4.0 to 8.0 wt.%,
      with
b) 30 to 61 wt.-%, preferably 30 to 51 wt.-% of a virgin heterophasic propylene copolymer having
   - a melt flow rate MFR₂ (230°C, ISO1133) of 0.15 to 0.35 g/10min, and
   - a Young's modulus of at least 1800 MPa determined in tensile testing according to ISO 527-2 on injection molded multi-purpose specimens prepared in accordance with ISO 527-1; and
   - a content of soluble fraction (SF), measured according to Crystex analysis as described in the specification, within the range from 3.0 to 8.0 wt.-%, and based on the total weight of the virgin heterophasic propylene copolymer; and
   - a total ethylene (C2) content, measured according to Crystex analysis as described in the specification, from 0.5 to 3.0 wt.-% based on the total weight of the virgin heterophasic propylene copolymer;
      all amounts with respect to the final resulting polypropylene-polyethylene composition.

The present invention further concerns a thermoformed article made from the polypropylene-polyethylene composition as described herein.

Unless defined otherwise, all technical and scientific terms used herein have the same meaning as commonly understood by one of ordinary skill in the art to which the invention pertains. Although, any methods and materials similar or equivalent to those described herein can be used in practice for testing of the present invention, the preferred materials and methods are described herein. In describing and claiming the present invention, the following terminology will be used in accordance with the definitions set out below. Unless clearly indicated otherwise, use of the terms "a," "an," and the like refers to one or more.

For the purposes of the present description, the term "recyclate fraction", "recyclate" or "recycled" is used to indicate a material recovered from both post-consumer waste and industrial waste, as opposed to virgin polymers.

Post-consumer waste refers to objects having completed at least a first use cycle (or life cycle), i.e. having already served their first purpose; while industrial waste refers to manufacturing scrap, which does not normally reach a consumer.

The term "virgin" denotes the newly produced materials and/or objects prior to their first use, which have not already been recycled.

Virgin materials and recycled materials easily can be differentiated based on absence or presence of contaminants such as limonene content, fatty acid content, polyamide content, polystyrene content, talc content and/or chalk content.

"Recyclate fraction" or "recyclate" denote fractions or materials containing residual amounts of limonene, fatty acids, polyamide, polystyrene, talc and/or chalk. "Residual content" denotes a content above the detection limit.

A polymer blend is a mixture of two or more polymeric components. It is self explaining that recyclates are nasty mixtures of countless polymers.

CRYSTEX analysis yields excellent and quick information as regards the amount of soluble fraction (SF), amount of crystalline fraction (CF), as well as intrinsic viscosities thereof [IV(SF)]; [IV(CF)]. Calibration also allows to provide the amount of units derived from ethylene in the soluble fraction (SF) as well as in the crystalline fraction (CF), i.e. C2(SF) and C2(CF) respectively.

Stating "measured according to Crystex analysis preferably as described in the specification" is to be understood as a reference to the experimental section and particularly the test methods.

The polypropylene-polyethylene composition according to the present invention preferably has a content of units derived from ethylene measured according to Crystex analysis preferably as described in the specification in the soluble fraction [C2(SF)] of 18.0 to 26.0 wt.%.

The polypropylene-polyethylene composition as described herein further has one or more of the following:
(i) a content of limonene as determined by using solid phase microextraction (HS-SPME-GC-MS) of from 0.1 ppm to 100 ppm,
(ii) a content of fatty acid(s) as determined by using solid phase microextraction (HS-SPME-GC-MS) of 0.1 to 100 ppm
(iii) a content of polyamide(s) as determined by IR of 0.001 to 0.5 wt.-%;
(iv) a content of polystyrene(s) as determined by IR of 0.05 to 0.8 wt.-%;
(v) a content of talc as determined by IR of 0.01 to 0.5 wt.-%;
(vi) a content of chalk as determined by IR of 0.01 to 0.5 wt.-%.

It goes without saying those contaminants result from the use of the polymers in their "first life": In other words, features (i) to (vi) indicate recyclate nature. This is particularly true for (i) and (ii) since such contaminants are not used in any virgin material.

In a preferred aspect, the polypropylene-polyethylene composition according to the present invention has
- a tensile modulus of at least 1500 MPa, (measured according to ISO 527-2); and
- an intrinsic viscosity of the soluble fraction [IV(SF)], measured according to Crystex analysis as described in the specification of 1.95 dl/g to 2.40 dl/g; and
- a content of units derived from ethylene in the crystalline fraction [C2(CF)] measured according to Crystex analysis as described in the specification in the range of 3.0 to 3.9 wt.%.

In yet another preferred aspect, the polypropylene-polyethylene composition according to the present invention has
- a content of units derived from ethylene in the soluble fraction [C2(SF)] measured according to Crystex analysis as described in the specification of 22.0 to 26.0 wt.%.

The polypropylene-polyethylene composition as described herein is preferably obtainable by blending
a) 39 to 70 wt.-%, preferably 49 to 70 wt.-% of a recycled polypropylene-polyethylene blend (A) having
   - a crystalline fraction (CF) measured according to Crystex analysis as described in the specification, present in an amount in the range from 89.0 to 92.0 wt.-% with respect to the total weight of the recycled polypropylene-polyethylene blend (A); and
   - a soluble fraction (SF) measured according to Crystex analysis as described in the specification, present in an amount in the range from 8.0 to 11.0 wt.-% with respect to the total weight of the recycled polypropylene-polyethylene blend (A); and
   - an intrinsic viscosity of the crystalline fraction [IV(CF)], measured according to Crystex analysis as described in the specification, in the range from 1.50 to 1.80 dl/g; and
   - an intrinsic viscosity of the soluble fraction [IV(SF)], measured according to Crystex analysis as described in the specification of 0.80 dl/g to 1.80 dl/g; and
      - a content of units derived from ethylene in the crystalline fraction [C2(CF)] measured according to Crystex analysis as described in the specification in the range of 4.0 to 8.0 wt.%, and optionally
   - a percentage of polyethylene melting enthalpy of lower than 2.5 %, preferably lower than 2.1 %;
      with
b) 30 to 61 wt.-%, preferably 30 to 51 wt.-% of a virgin heterophasic propylene copolymer having
   - a melt flow rate MFR₂ (230°C, ISO1133) of 0.15 to 0.35 g/10min, and
   - a Young's modulus of at least 1800 MPa determined in tensile testing according to ISO 527-2 on injection molded multi-purpose specimens prepared in accordance with ISO 527-1, and
   - a content of soluble fraction (SF), measured according to Crystex analysis as described in the specification, within the range from 3.0 to 8.0 wt.-%, and based on the total weight of the virgin heterophasic propylene copolymer, and
   - a total ethylene (C2) content, measured according to Crystex analysis as described in the specification, from 0.5 to 3.0 wt.-% based on the total weight of the virgin heterophasic propylene copolymer,
all amounts with respect to the final resulting polypropylene-polyethylene composition.

Recycled polypropylene-polyethylene blends (A) as required are commercially available. It is further possible to screen several commercial recyclate products and to prepare intermediate blends in order to meet the requirements.

The recycled polypropylene-polyethylene blend (A) is obtained from recycled waste stream of either recycled post-consumer waste or post-industrial waste, such as for example from the automobile industry, or alternatively, a combination of both. It is particularly preferred that the polypropylene-polyethylene blend (A) consists of recycled post-consumer waste and/or post-industrial waste.

In one aspect the polypropylene-polyethylene blend (A) may be a polypropylene (PP) rich material of recycled plastic material that comprises significantly more polypropylene than polyethylene. Recycled waste streams, which are high in polypropylene can be obtained for example from the automobile industry, particularly as some automobile parts such as bumpers are sources of fairly pure polypropylene material in a recycling stream or by enhanced sorting. The polypropylene rich material may be obtained by selective processing, degassing and filtration and/or by separation according to type and colors such as NIR or Raman sorting and VIS sorting. It may be obtained from domestic waste streams (i.e. it is a product of domestic recycling) for example the "yellow bag" recycling system organized under the "Green dot" organization, which operates in some parts of Germany.

Preferably, the polypropylene-polyethylene blend (A) is obtained from recycled waste by means of plastic recycling processes known in the art. Polypropylene-polyethylene blends (A) as used herein are commercially available, e.g. from Corepla (Italian Consortium for the collection, recovery, recycling of packaging plastic wastes), Resource Plastics Corp. (Brampton, ON), Steinbeis PolyVert, Plastics and Recycling (AT), Vogt Plastik GmbH (DE), Mtm Plastics GmbH (DE) etc. None exhaustive examples of polypropylene rich recycled materials include: Dipolen^{®}PP, Purpolen^{®}PP (Mtm Plastics GmbH), Kruplene-C PP (Steinbeis PolyVert), Systalen PP (Systec Plastics GmbH), Axpoly^{®} recycled polypropylene pellets (Axion Ltd) and PolyPropylene Copolymer (BSP Compounds). A particularly suitable polypropylene-polyethylene blend (A) is "Kruplene-C chalk white 10.1-15.0" which may also be marketed as "Steinbeis rPP" or "Steinbeis rPP C chalk white 10.1-15.0" by Steinbeis Polyvert.

Virgin heterophasic propylene copolymers as blend partner required herein are also commercially available. A preferred virgin heterophasic propylene copolymer is Borealis BA2000.

It is particularly preferred that said virgin heterophasic propylene copolymer has a Charpy notched impact strength (1eA) (non-instrumented, ISO 179-1 at +23 °C) of at least 27 kJ/m². Preferentially the Charpy notched impact strength (1eA) (non-instrumented, ISO 179-1 at +23 °C) is within the range of 28 to 34 kJ/m².

The preferred polypropylene-polyethylene composition as described above is obtainable by blending
a) 39 to 70 wt.-%, preferably 49 to 70 wt.-% of a recycled polypropylene-polyethylene blend (A) having
   - a crystalline fraction (CF) measured according to Crystex analysis as described in the specification, present in an amount in the range from 89.0 to 90.7 wt.-% with respect to the total weight of the recycled polypropylene-polyethylene blend (A); and
   - a soluble fraction (SF) measured according to Crystex analysis as described in the specification, present in an amount in the range from 9.3 to 11.0 wt.-% with respect to the total weight of the recycled polypropylene-polyethylene blend (A); and
   - an intrinsic viscosity of the soluble fraction [IV(SF)], measured according to Crystex analysis as described in the specification of 1.60 dl/g to 1.80 dl/g; and
   - a content of units derived from ethylene in the crystalline fraction [C2(CF)] measured according to Crystex analysis as described in the specification in the range of 4.0 to 4.7 wt.%, and optionally
   - a percentage of polyethylene melting enthalpy of lower than 2.1 %;
      with
b) 30 to 61 wt.-%, preferably 30 to 51 wt.-% of a virgin heterophasic propylene copolymer having
   - a melt flow rate MFR₂ (230°C, ISO1133) of 0.15 to 0.35 g/10min, and
   - a Young's modulus of at least 1800 MPa determined in tensile testing according to ISO 527-2 on injection molded multi-purpose specimens prepared in accordance with ISO 527-1; and
   - a Charpy notched impact strength (1eA) (non-instrumented, ISO 179-1 at +23 °C) of at least 27 kJ/m², and
   - a content of soluble fraction (SF), measured according to Crystex analysis as described in the specification, within the range from 3.0 to 8.0 wt.-%, and based on the total weight of the virgin heterophasic propylene copolymer; and
   - a total ethylene (C2) content, measured according to Crystex analysis as described in the specification, from 0.5 to 3.0 wt.-%,
   all amounts with respect to the final polypropylene-polyethylene composition.

It will be appreciated by those skilled in the art that with respect to the recyclate, i.e. polypropylene-polyethylene blend (A),
a) a relatively high amount of crystalline fraction (CF) measured according to Crystex analysis as described in the specification, present in the range from 89.0 to 90.7 wt.-% with respect to the total weight of the recycled polypropylene-polyethylene blend (A); together with
b) a rather higher intrinsic viscosity of the soluble fraction [IV(SF)], measured according to Crystex analysis as described in the specification of 1.60 dl/g to 1.80 dl/g; together with
c) a rather low content of units derived from ethylene in the crystalline fraction [C2(CF)] measured according to Crystex analysis as described in the specification in the range of 4.0 to 4.7 wt.%
are beneficial.

Moreover, the polypropylene-polyethylene blend (A) has a percentage of polyethylene melting enthalpy of lower than 2.5 %, preferably lower than 2.1 %, most preferably lower than 2.0 wt.-%.

It further will be appreciated by those skilled in the art that said virgin heterophasic propylene copolymer as used herein is featured by a relatively low content of soluble fraction (SF), measured according to Crystex analysis as described in the specification, within the range from 3.0 to 8.0 wt.-%, and is further featured by a relatively low total ethylene (C2) content, measured according to Crystex analysis as described in the specification, from 0.5 to 3.0 wt.-%.

In a further preferred aspect, the polypropylene-polyethylene compositions as described herein are further characterized by the following inequations: $- 1.96 * C 2 \left(CF\right) \left[in wt.-%\right] + 12.13 * IV \left(SF\right) \left[in dl/g\right] > 96$ and/or $- 0.32 * C 2 \left(CF\right) \left[in wt.-%\right] + 9.5 * IV \left(SF\right) \left[in dl/g\right] > 151.5$

In yet a further aspect, the present invention concerns a process of blending for obtaining a polypropylene-polyethylene composition
a) 39 to 70 wt.-%, preferably 49 to 70 wt.-% of a recycled polypropylene-polyethylene blend (A) having
   - a crystalline fraction (CF) measured according to Crystex analysis as described in the specification, present in an amount in the range from 89.0 to 92.0 wt.-% with respect to the total weight of the recycled polypropylene-polyethylene blend (A); and
   - a soluble fraction (SF) measured according to Crystex analysis as described in the specification, present in an amount in the range from 8.0 to 11.0 wt.-% with respect to the total weight of the recycled polypropylene-polyethylene blend (A); and
   - an intrinsic viscosity of the crystalline fraction [IV(CF)], measured according to Crystex analysis as described in the specification, in the range from 1.50 to 1.80 dl/g; and
   - an intrinsic viscosity of the soluble fraction [IV(SF)], measured according to Crystex analysis as described in the specification of 0.80 dl/g to 1.80 dl/g; and
   - a content of units derived from ethylene in the crystalline fraction [C2(CF)] measured according to Crystex analysis as described in the specification in the range of 4.0 to 8.0 wt.%,
      with
b) 30 to 61 wt.-%, preferably 30 to 51 wt.-% of a virgin heterophasic propylene copolymer having
   - a melt flow rate MFR₂ (230°C, ISO1133) of 0.15 to 0.35 g/10min, and
   - a Young's modulus of at least 1800 MPa determined in tensile testing according to ISO 527-2 on injection molded multi-purpose specimens prepared in accordance with ISO 527-1;
   - a content of soluble fraction (SF), measured according to Crystex analysis as described in the specification, within the range from 3.0 to 8.0 wt.-%, and based on the total weight of the virgin heterophasic propylene copolymer; and
   - a total ethylene (C2) content, measured according to Crystex analysis as described in the specification, from 0.5 to 3.0 wt.-% based on the total weight of the virgin heterophasic propylene copolymer;
   all amounts with respect to the final resulting polypropylene-polyethylene composition.

Blending will be usually done by use of an extruder in the presence of a stabilizer package such as known in the art. In the process said virgin heterophasic propylene copolymer preferably has a Charpy notched impact strength (1eA) (non-instrumented, ISO 179-1 at +23 °C) of at least 20 kJ/m². All ranges as discussed above with respect to the composition also hold for the process.

The virgin heterophasic polypropylene copolymer shall be described in more detail in the following.

The virgin heterophasic propylene copolymers comprise as polymer components a polypropylene matrix (M) and an elastomeric copolymer (EPC). In one embodiment, the least one heterophasic propylene copolymer (HECO) includes a propylene homopolymer (PPH) as (semicrystalline) matrix and a propylene-ethylene rubber as elastomeric propylene copolymer (EPC).

The polypropylene matrix (M) is preferably a random propylene copolymer or a propylene homopolymer, the latter being especially preferred. The expression "propylene homopolymer relates to a polypropylene that consists of more than 99.5 wt.-%, preferably of more than or at least of 99.7 wt.-% of propylene units. In a preferred embodiment only propylene units are detectable in the propylene homopolymer.

The elastomeric propylene copolymer (EPC) comprises units derived from propylene and ethylene and/or C4 to C20 alpha-olefins, more preferably from ethylene and/or C4 to C10 alpha-olefins and most preferably from ethylene, C4, C6 and/or C8 alpha-olefins, e.g. ethylene and, optionally, units derived from a conjugated diene.

The virgin heterophasic propylene copolymer preferably has a total ethylene (C2) content, measured according to Crystex analysis as described in the specification, from 0.5 to 3.0 wt.-%, more preferably from 0.9 to 2.5 wt.-%, most preferably from 1.0 to 2.0 wt.-%.

The virgin heterophasic propylene copolymer preferably has a content of soluble fraction (SF), measured according to Crystex analysis as described in the specification, within the range 3.0 to 8.0 wt.-%, more preferably 4.0 to 7.0 wt.-%, and most preferably 5.0 to 6.0 wt.-% based on the total weight of the virgin heterophasic propylene copolymer.

The soluble fraction (SF) of the virgin heterophasic propylene copolymer preferably has an ethylene content (C2(SF)), measured according to Crystex analysis as described in the specification, in the range from 10.0 to 30.0 wt.-%, more preferably in the range from 15.0 to 25.0 wt.-%, and most preferably in the range from 18.0 to 22.0 wt.-%.

The soluble fraction (SF) of the virgin heterophasic propylene copolymer (HECO-1) preferably has an intrinsic viscosity (iV(SF)) of not more than 4.0 dl/g, more preferably in the range of 3.0 to 4.0 dl/g, even more preferably in the range of 3.2 to 3.9 dl/g, such as 3.5 dl/g.

The crystalline fraction (CF) of the virgin heterophasic propylene copolymer (HECO-1) preferably has an ethylene content (C2(CF)), measured according to Crystex analysis as described in the specification, in the range from 0.1 to 2.0 wt.-%, more preferably in the range from 0.2 to 1.0 wt.-%, and most preferably in the range from 0.3 to 0.5 wt.-%.

It is to be understood that the present polypropylene polyethylene composition may comprise not only one, but two virgin heterophasic propylene copolymers with different melt flow rates. This allows for an adjustment of the melt flow rate of the final polyolefin composition.

The at least one virgin heterophasic propylene copolymer has an impact strength (ISO179-1, Charpy 1eA +23°C) of at least 17 kJ/m², more preferably at least 19 kJ/m², still more preferably of at least 20 kJ/m², in particular in a range between 15 and 40 kJ/m², more particular in a range between 17 and 38 kJ/m², even more particular in a range between 20 and 36 kJ/m².

The virgin heterophasic propylene copolymer may have a tensile Young's modulus measured according to ISO 527-2 of at least 1800 MPa, preferably at least 1830 MPa, like in the range of 1800 to 2100 MPa, preferably in the range of 1830 to 2050 MPa.

The virgin heterophasic propylene copolymer (Heco-1) may preferably have a Yield strength of 30-40 MPa, more preferably of 33-37 MPa and independent thereof preferably a strain-at-break of 40-50 %, more preferably of 44-46%.

The present invention further concerns a thermoformed article made from polypropylene-polyethylene composition as described herein. Again all preferred aspects and ranges as disclosed for the composition also hold for the thermoformed article. The thermoformed article made from polypropylene-polyethylene composition as described herein preferably contains the polypropylene-polyethylene composition in an amount of at least 97.0 wt.-% with respect to the article, more preferably at least 98.0 wt.-%, and most preferably at least 98.5 wt.-%.

### Experimental Section

The following Examples are included to demonstrate certain aspects and embodiments of the invention as described in the claims. It should be appreciated by those of skill in the art, however, that the following description is illustrative only and should not be taken in any way as a restriction of the invention.

### Test Methods

### a) CRYSTEX

### Determination of Crystalline and soluble fractions and their respective properties (IV and Ethylene content)

The crystalline (CF) and soluble fractions (SF) of the polypropylene (PP) compositions as well as the comonomer content and intrinsic viscosities of the respective fractions were analyzed by use of the Crystex (crystallisation extraction) method. Potential instruments that can be used are Crystex QC or Crystex 42 (Polymer Char; Valencia, Spain). Details of the technique and the method can be found in literature (Ljiljana Jeremic, Andreas Albrecht, Martina Sandholzer & Markus Gahleitner (2020) Rapid characterization of high-impact ethylene-propylene copolymer composition by crystallization extraction separation: comparability to standard separation methods, International Journal of Polymer Analysis and Characterization, 25:8, 581-596)

The crystalline and amorphous fractions are separated through temperature cycles of dissolution at 160°C, crystallization at 40°C and re-dissolution in 1,2,4-trichlorobenzene at 160°C. Quantification of SF and CF and determination of ethylene content (C2) are achieved by means of an integrated infrared detector (IR4) and for the determination of the intrinsic viscosity (IV) an online 2-capillary viscometer is used.

IR4 detector is a multiple wavelength detector measuring IR absorbance at two different bands (CH3 stretching vibration (centred at app. 2960 cm⁻¹) and the CH stretching vibration (2700-3000 cm⁻¹) that are serving for the determination of the concentration and the Ethylene content in Ethylene-Propylene copolymers. IR4 detector is calibrated with series of 8 EP copolymers with known Ethylene content in the range of 2 wt.-% to 69 wt.-% (determined by 13C-NMR) and each at various concentrations, in the range of 2 and 13mg/ml. To encounter for both features, concentration and ethylene content at the same time for various polymer concentration expected during Crystex analyses the following calibration equations were applied: 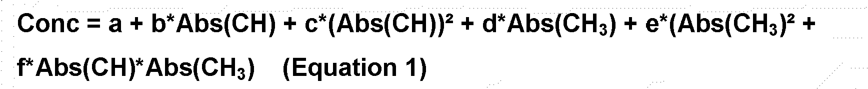 Conc = a +b*Abs(CH) + c*(Abs(CH))2 + d*Abs(CH3) + e*(Abs(CH3)2) + f*Abs(CH)*Abs(CH3) (Equation 1) 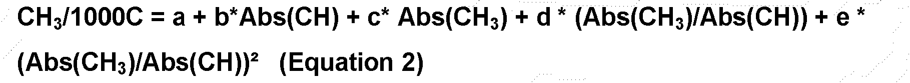 CH3/1000C = a + b*Abs(CH) + c * Abs(CH3) + d * (Abs(CH3)/Abs(CH)) + e * (Abs(CH3)/Abs(CH))2 (Equation 2)

The constants a to e for equation 1 and a to f for equation 2 were determined by using least square regression analysis.

The CH₃/1000C is converted to the ethylene content in wt.-% using following relationship: $Wt . - % \left(Ethylene in EP Copolymers\right) = 100 - {CH}_{3} / 1000 TC * 0.3$ (Equation 3)

Amount of Soluble fraction (SF) and Crystalline Fraction (CF) are correlated through the XS calibration to the "Xylene Cold Soluble" (XCS) quantity and respectively Xylene Cold Insoluble (XCI) fractions, determined according to standard gravimetric method as per ISO16152. XS calibration is achieved by testing various EP copolymers with XS content in the range 2-31 Wt.-%. A linear calibration curve is used.

Intrinsic viscosity (IV) of the parent EP copolymer and its soluble and crystalline fractions are determined with a use of an online 2-capillary viscometer and are correlated to corresponding IV's determined by standard method in decalin according to ISO 1628-3. Calibration is achieved with various EP PP copolymers with IV = 2-4 dL/g. The determined calibration curve is linear.

The samples to be analyzed are weighed out in concentrations of 10mg/ml to 20mg/ml. To avoid injecting possible gels and/or polymers which do not dissolve in TCB at 160°C, like PET and PA, the weighed out sample was packed into a stainless steel mesh MW 0,077/D 0,05mmm.

After automated filling of the vial with 1,2,4-TCB containing 250 mg/l 2,6-tert-butyl-4-methylphenol (BHT) as antioxidant, the sample is dissolved at 160°C until complete dissolution is achieved, usually for 60 min, with either constant stirring or gentle shaking. To avoid sample degradation, polymer solution is blanketed with the N2 atmosphere during dissolution.

A defined volume of the sample solution is injected into the column filled with inert support where the crystallization of the sample and separation of the soluble fraction from the crystalline part is taking place. This process is repeated two times. During the first injection the whole sample is measured at high temperature, determining the IV[dl/g] and the C2[wt.-%] of the PP composition. During the second injection the soluble fraction (at low temperature) and the crystalline fraction (at high temperature) with the crystallization cycle are measured (Wt.-% SF, Wt.-% C2, IV).

### b) Amount of "iPP", "PVC", "PA", "PET", "PS" and "PE" determination by Transmission Infra-Red spectroscopy

### Sample preparation:

All calibration samples and samples to be analyzed are prepared in similar way, on molten pressed plates.

Around 2 to 3 g of compounds to be analyzed are molten at 190°C. Subsequently, for 20 seconds 60 to 80 bar pressure is applied in a hydraulic heating press. Next, the samples are cooled down to room temperature in 40 second in a cold press under the same pressure, in order to control the morphology of the compound. The thickness of the plates are controlled by metallic calibrated frame plates 2,5 cm by 2,5 cm, 100 to 200 µm thick (depending MFR from the sample); two plates are produced in parallel at the same moment and in the same conditions. The thickness of each plate is measured before any FTIR measurements; all plates are between 100 to 200 µm thick.

To control the plate surface and to avoid any interference during the measurement, all plates are pressed between two double-sided silicone release papers.

In case of powder samples or heterogeneous compounds, the pressing process would be repeated three times to increase homogeneity by pressed and cutting the sample in the same conditions as described before.

### Spectrometer:

Standard transmission FTIR spectroscope such as Bruker Vertex 70 FTIR spectrometer is used with the following set-up:
- a spectral range of 4000-400 cm⁻¹,
- an aperture of 6 mm,
- a spectral resolution of 2 cm⁻¹,
- with 16 background scans, 16 spectrum scans,
- an interferogram zero filling factor of 32
- Norton Beer strong apodisation.

Spectrum are recorded and analysed in Bruker Opus software.

### Calibration samples:

As FTIR is a secondary method, several calibration standards were compounded to cover the targeted analysis range, typically from:
- 0,2 wt.-% to 2,5 wt.-% for PA
- 0,1 wt.-% to 5 wt.-% for PS
- 0,2 wt.-% to 2,5 wt.-% for PET
- 0,1 wt.-% to 4 wt.-% for PVC

The following commercial materials were used for the compounds: Borealis HC600TF as iPP, Borealis FB3450 as HDPE and for the targeted polymers such RAMAPET N1S
(Indorama Polymer) for PET, Ultramid^{®} B36LN (BASF) for Polyamide 6, Styrolution PS 486N (Ineos) for High Impact Polystyrene (HIPS), and for PVC Inovyn PVC 263B (under powder form).

All compounds are made at small scale in a Haake kneader at a temperature below 265°C and less than 10 minutes to avoid degradation. Additional antioxidant such as Irgafos 168 (3000 ppm) is added to minimise the degradation.

### Calibration:

The FTIR calibration principal is the same for all the components: the intensity of a specific FTIR band divided by the plate thickness is correlated to the amount of component determined by 1H or 13C solution state NMR on the same plate.

Each specific FTIR absorption band is chosen due to its intensity increase with the amount of the component concentration and due to its isolation from the rest of the peaks, whatever the composition of the calibration standard and real samples.

This methodology is described in the publication from Signoret and al. "Alterations of plastic spectra in MIR and the potential impacts on identification towards recycling", Resources, conservation and Recycling journal, 2020, volume 161, article 104980.

The wavelength for each calibration band is:
- 3300 cm⁻¹ for PA,
- 1601 cm⁻¹ for PS,
- 1410 cm⁻¹ for PET,
- 615 cm⁻¹ for PVC,
- 1167 cm⁻¹ for iPP.

For each polymer component i, a linear calibration (based on linearity of Beer-Lambert law) is constructed. A typical linear correlation used for such calibrations is given below: ${x}_{i} = {A}_{i} . \frac{{E}_{i}}{d} + {B}_{i}$
where xᵢ is the fraction amount of the polymer component i (in wt.-%)
Eᵢ is the absorbance intensity of the specific band related to the polymer component i (in a.u. absorbance unit). These specific bands are, 3300 cm⁻¹ for PA, 1601 cm⁻¹ for PS, 1410 cm⁻¹ for PET, 615 cm⁻¹ for PVC, 1167 cm⁻¹ for iPP
d is the thickness of the sample plate
Aᵢ and Bᵢ are two coefficients of correlation determined for each calibration curve

No specific isolated band can be found for C2 rich fraction and as a consequence the C2 rich fraction is estimated indirectly, ${x}_{C 2 rich} = 100 - \left({x}_{iPP}+{x}_{PA}+{x}_{PS}+{x}_{PET}+{x}_{EVA}+{x}_{PVC}+{x}_{chalk}+{x}_{talc}\right)$

The EVA, Chalk and Talc contents are estimated "semi-quantitatively".

Hence, this renders the C2 rich content "semi-quantitative".

The following bands are used to estimate the EVA, Chalk and Talc contents:
EVA: band centred at 607 cm⁻¹
Chalk : band centred at 1798 cm⁻¹
Talc : band centred at 3676 cm⁻¹

In addition, the presence of titanium di-oxide, TiO₂ and Carbon Black are reported. Their quantifications are not feasible with FTIR.

For each calibration standard, wherever available, the amount of each component is determined by either ¹H or ¹³C solution state NMR, as primary method (except for PA). The NMR measurements are performed on the exact same FTIR plates used for the construction of the FTIR calibration curves.

### c) Quantification of microstructure by NMR spectroscopy

Quantitative nuclear-magnetic resonance (NMR) spectroscopy was used to quantify the ethylene content of the polymers.

Quantitative ¹³C{¹H} NMR spectra were recorded in the solution-state using a Bruker Avance Neo 400 NMR spectrometer operating at 400.15 and 100.62 MHz for ¹H and ¹³C respectively. All spectra were recorded using a ¹³C optimised 10 mm extended temperature probehead at 125°C using nitrogen gas for all pneumatics. Approximately 200 mg of material was dissolved in approximately 3 ml of 1,2-tetrachloroethane-*d*₂ (TCE-*d*₂) along with approximately 3 mg BHT (2,6-di-tert-butyl-4-methylphenol CAS 128-37-0) and chromium-(III)-acetylacetonate (Cr(acac)₃) resulting in a 60 mM solution of relaxation agent in solvent as described in G. Singh, A. Kothari, V. Gupta, Polymer Testing 2009, 28(5), 475.

To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme as described in Z. Zhou, R. Kuemmerle, X. Qiu, D. Redwine, R. Cong, A. Taha, D. Baugh, B. Winniford, J. Mag. Reson. 187 (2007) 225 and V. Busico, P. Carbonniere, R. Cipullo, C. Pellecchia, J. Severn, G. Talarico, Macromol. Rapid Commun. 2007, 28, 1128. A total of 6144 (6k) transients were acquired per spectra.

Quantitative ¹³C{¹H} NMR spectra were processed, integrated and relevant quantitative properties determined from the integrals. All chemical shifts were indirectly referenced to the central methylene group of the ethylene block (EEE) at 30.00 ppm using the chemical shift of the solvent. This approach allowed comparable referencing even when this structural unit was not present.

Characteristic signals corresponding to the incorporation of ethylene were observed (as described in Cheng, H. N., Macromolecules 1984, 17, 1950) and the comonomer fraction calculated as the fraction of ethylene in the polymer with respect to all monomer in the polymer: $fE = \left(E/\left(P+E\right)\right)$

The comonomer fraction was quantified using the method of W-J. Wang and S. Zhu, Macromolecules 2000, 33 1157, through integration of multiple signals across the whole spectral region in the ¹³C{¹H} spectra. Integral regions were slightly adjusted to increase applicability across the whole range of encountered comonomer contents. The mole percent comonomer incorporation was calculated from the mole fraction: $E \left[mol%\right] = 100 * fE$

The weight percent comonomer incorporation was calculated from the mole fraction: $E \left[wt.-%\right] = 100 * \left(fE*28.06\right) / \left(\left(fE*28.06\right)+\left(\left(1-fE\right)*42.08\right)\right)$

### d) Heat Deflection Temperature (HDT) ISO 75 - method B:

The HDT was determined according to ISO 75 method B on specimens of 80 mm ×10 mm × 4 mm. Test specimens were injection moulded according to ISO 19069-2. The specimen were loaded in a three point bending set-up. The specimens are loaded aiming to an outer fibre stress of 0.45 MPa. The temperature is raised with a constant heating rate of 120 °C/h until an outer fibre strain reached 0.2 %. That temperature corresponding this deformation is the heat deflection temperature.

### e) Vicat Softening Temperature (Method A - 50)

The Vicat softening temperature (VST) test was conducted according to ISO 306 method A50 using a load of 10 N and a heating rate of 50 °C /h. The test specimens had a dimension of 10 mm × 10 mm × 4 mm. Type B bars (ISO 20753) 80 mm x 10 mm x 4 mm were injection moulded according to ISO 19069-2. The specimens were milled from the centre of Type B bars to the final dimensions.

### f) Production of multipurpose specimens (MPS) and Charpy Type 1 specimen

All MPS were produced via injection molding according to ISO 3167 (Plastics - Multipurpose test specimens) and ISO 19069-2 (Plastics - Polypropylene (PP) moulding and extrusion materials - Part 2: Preparation of test specimens and determination of properties) on an Engel Victory 60 (Engel, Austria). Specimens were conditioned at 23 °C and 50 % relative humidity for at least three days. After conditioning, these specimens were used for tensile testing. Type 1 specimens for Charpy notched impact testing were prepared via injection moulding according to ISO 19069-2:2016 and also conditioned at 23 °C and 50 % relative humidity for at least three days before testing.

### g) Melt flow rate (MFR)

The MFR measurements were conducted at 230 °C and with 2.16 kg on a Zwick/Roell Mflow melt flow indexer (Zwick Roell, Germany) according to ISO 1133-1 (Plastics - Determination of the melt mass-flow rate (MFR) and melt volume-flow rate (MVR) of thermoplastics - Part 1: Standard method). Cuts were made every 3 mm piston movement. The time between cuts was measured and each extrudate was weighted on an ABS 220-4 electronic balance (Kern & Sohn, Germany). The extrapolation to 10 minutes calculated the MFR in g/10 min for each cut. For each material, one measurement was conducted. Within one measurement, 6 cuts were made and used for the calculation of average values and standard deviations.

### h) Density

The density measurements were conducted according to ISO 01183-1 (Plastics - Methods for determining the density of non-cellular plastics - Part 1: Immersion method, liquid pycnometer method and titration method) with a Sartorius CPA 225D lab balance (Sartorius, Germany). Samples were cut from the sprue-sided shoulders of multi-purpose specimens (MPS). In the first step, the respective sample was weighed dry, measuring its mass in air (m_{S,A}). In the second step, the sample was immersed in deionized water with added detergent and put below a buoyancy cage which was connected to the scale, enabling the measurement of the sample buoyancy (m_{S.IL}) without the need of a sinker. A wire was used to free the sample of air bubbles and the temperature of the immersion liquid was recorded for the calculation of its density (ρ_{IL}). The sample density was calculated according to following formula with measurement apparatus correction variables A and B: ${ρ}_{s} = \frac{{m}_{S . A} * {ρ}_{IL}}{A ∗ \left({m}_{S . A}-{m}_{S . IL}\right)} + B$

For each material, five samples, each cut from an individual MPS, were used for the calculation of average values and standard deviations.

### i) Differential scanning calorimetry (DSC)

DSC tests were carried out on a Perkin Elmer differential scanning calorimeter DSC 8500 (PerkinElmer, USA). Samples were cut from shoulders of injection molded multi-purpose specimens and encapsuled in perforated aluminum pans. The average sample weight was around 5 mg. The procedure consisted of a first heating, subsequent cooling, and a second heating phase, each in the temperature range of 0 °C to 200 °C with a constant heating/cooling rate of 10 K/min with nitrogen as purge gas and a flow rate of 20 ml/min. The DSC measurements were accomplished to determine the melting peak in the second heat-up phase which is characteristic for the semi-crystallinity achieved under controlled cooling in the DSC device. To determine the melting enthalpy, the area of the melting peak was integrated. Due to the normalization of the heat flux via the specimen mass the thermogram can be shown as normalized heat flux (W/g) over time (s) and the area of the peak (W/g * s) will calculate to W*s/g or J/g normalized melting enthalpy. For each material, five samples, each cut from an individual MPS, were used for the calculation of average values and standard deviations. Measurements were made according to ISO 11357-1 (Plastics - Differential scanning calorimetry (DSC) - Part 1: General principles) and ISO 11357-3 (Part 3: Determination of temperature and enthalpy of melting and crystallization). In short, the area of the melting peak in the second heating run was integrated.

The percentage of polyethylene melting enthalpy is calculated as follows: 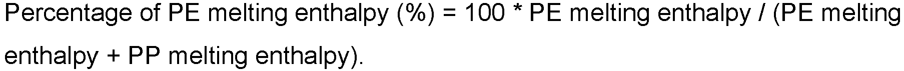 Percentage of PE melting enthalpy (%) = 100 * PE melting enthalpy / (PE melting enthalpy + PP melting enthalpy).

### j) Oxidation induction temperature (Tₒₓ)

A differential thermal analysis (DTA) instrument of the type DSC 4000 (PerkinElmer, USA) was utilized to characterize the oxidation induction temperature (dynamic OIT) according to ISO 11357-6 (Plastics - Differential scanning calorimetry (DSC) - Part 6: Determination of oxidation induction time (isothermal OIT) and oxidation induction temperature (dynamic OIT)). Samples were cut from shoulders of injection molded MPS and encapsuled in perforated aluminum pans. The average sample weight was around 5 mg. A single heating step between 23 °C and 300 °C was performed with a heating rate of 10 K/min with synthetic air as purge gas and a flow rate of 20 ml/min. The point of intersect of the slope before oxidation and during oxidation gives the onset of oxidation or the oxidation induction temperature in °C. For each material, five samples, each cut from an individual MPS, were used for the calculation of average values and standard deviations.

### k) Tensile properties

The mechanical properties (Young's modulus, yield strength and strain at break) were examined with a universal testing machine Zwick AllroundLine Z020 (Zwick Roell, Germany) equipped with a multi-extensometer at 23 °C. Test parameters and MPS were used according to ISO 527-1 (Plastics - Determination of tensile properties - Part 1: General principles) and ISO 527-2 (Part 2: Test conditions for moulding and extrusion plastics) with a traverse speed of 1 mm/min for Young's modulus determination until a strain of 0.25 % and after that 50 mm/min until failure. For each material five MPS were tested for the calculation of average values and standard deviations.

### I) Charpy notched impact strength

Impact tests were conducted according to ISO 179-1 (Plastics - Determination of Charpy impact properties - Part 1: Non-instrumented impact test) on a Zwick/Roell HIT25P pendulum impact tester (Zwick Roell, Germany) with injection molded specimens (see information below). After pretests to determine the suitable pendulum size, appropriate pendulums were chosen for testing each respective material. Notches were produced with a Leica RM2265 microtome (Leica, Germany) and measured on an Olympus SZX16 stereomicroscope (Olympus, Japan). Test conditions were 23 °C with edgewise notched specimens with 0.25 mm notch-radius (1eA). For each material ten specimens were tested for the calculation of average values and standard deviations.

### m) Limonene Measurement

Limonene quantification was carried out using solid phase microextraction (HS-SPME-GC-MS) by standard addition.

50 mg ground samples were weighed into 20 mL headspace vials and after the addition of limonene in different concentrations and a glass-coated magnetic stir bar. The vial was closed with a magnetic cap lined with silicone/PTFE. Micro capillaries (10 pL) were used to add diluted limonene standards of known concentrations to the sample. Addition of 0, 2, 20 and 100 ng equals 0 mg/kg, 0.1 mg/kg, 1mg/kg and 5 mg/kg limonene, in addition standard amounts of 6.6 mg/kg, 11 mg/kg and 16.5 mg/kg limonene were used in combination with some of the samples tested in this application. For quantification, ion-93 acquired in SIM mode was used. Enrichment of the volatile fraction was carried out by headspace solid phase microextraction with a 2 cm stable flex 50/30 pm DVB/Carboxen/PDMS fibre at 60°C for 20 minutes. Desorption was carried out directly in the heated injection port of a GCMS system at 270°C.

### GCMS Parameters:

Column: 30 m HP 5 MS 0.25*0.25
Injector: Splitless with 0.75 mm SPME Liner, 270°C
Temperature program: -10°C ( 1 min)
Carrier gas: Helium 5.0, 31 cm/s linear velocity, constant flow
MS: Single quadrupole, direct interface, 280°C interface temperature
Acquisition: SIM scan mode
Scan parameter: 20-300 amu
SIM Parameter: m/Z 93, 100 ms dwell time

### n) Total free fatty acid content

Fatty acid quantification was carried out using headspace solid phase micro-extraction (HS-SPME-GC-MS) by standard addition.

50 mg ground samples were weighed in 20 mL headspace vial and after the addition of limonene in different concentrations and a glass coated magnetic stir bar the vial was closed with a magnetic cap lined with silicone/PTFE. 10 µL Micro-capillaries were used to add diluted free fatty acid mix (acetic acid, propionic acid, butyric acid, pentanoic acid, hexanoic acid and octanoic acid) standards of known concentrations to the sample at three different levels. Addition of 0, 50, 100 and 500 ng equals 0 mg/kg, 1 mg/kg, 2 mg/kg and 10 mg/kg of each individual acid. For quantification ion 60 acquired in SIM mode was used for all acids except propanoic acid, here ion 74 was used.

### GCMS Parameter:

Column: 20 m ZB Wax plus 0.25*0.25
Injector: Split 5:1 with glass lined split liner, 250°C
Temperature program: 40°C ( 1 min) @6°C/min to 120°C, @15°C to 245 °C (5 min)
Carrier: Helium 5.0, 40 cm/s linear velocity, constant flow
MS: Single quadrupole, direct interface, 220°C inter face temperature
Acquisition: SIM scan mode
Scan parameter: 46-250 amu 6.6 scans/s
SIM Parameter: m/z 60,74, 6.6 scans/s

### Experiments

Commercially available polypropylene-polyethylene blends (A) were used. Table 1 provides an overview of the polypropylene-polyethylene blends (A) #1, #2 and #3.

**Table 1: Overview of polypropylene-polyethylene blends (A)**

| | polypropylene-polyethylene blend (A) #1 | polypropylene-polyethylene blend (A) #2 | polypropylene-polyethylene blend (A) #3 |
|---|---|---|---|
| MFR (230 °C/2.16 kg) [g/10min] | 15.8 | 13.3 | 17.4 |
| Charpy nIS [kJ/m²] | 6.2 | 6.8 | 6.1 |
| Young's Modulus [MPa] | 1170 | 1320 | 1090 |
| Yield Strength [MPa] | 27.2 | 28.1 | 26.9 |
| Strain-at-break [%] | 46.5 | 38.9 | 276.6 |
| | | | |
| IR-iPP [wt.-%] | 91.3 | 92.3 | 91.6 |
| IR-PA [wt.-%] | 0.1 | 0.1 | 0.1 |
| IR-PS [wt.-%] | 0.8 | 0.1 | n.detected |
| IR-TALC [wt.-%] | 0.4 | 0.3 | n.detected |
| IR-CHALC [wt.-%] | 0.4 | 0.3 | n.detected |
| NMR-C2 [wt.-%] | 9.22 | 6.91 | 6.72 |
| Crystex_C2 (wt.-%) | 8.86 | 7.09 | 7.44 |
| Crystex_C2 crystalline fraction (wt.-%) | 7.16 | 4.49 | 6.26 |
| Crystex_C2 soluble fraction (wt.-%) | 29.3 | 30.16 | 22.74 |
| Crystex crystalline fraction (CF) (wt.-%) | 90.7 | 89.46 | 91.73 |
| Crystex_IV (dL/g) | 1.68 | 1.74 | 1.63 |
| Crystex_IV crystalline fraction (dL/g) | 1.7 | 1.73 | 1.67 |
| Crystex_IV soluble fraction (dL/g) | 1.44 | 1.75 | 0.9 |
| Crystex_soluble fraction (wt.-%) | 9.3 | 10.54 | 8.27 |
| PE melting temperature (°C) | 124.3 | 124.6 | 124.7 |
| PE melting enthalpy (J/g) | 2.2 | 1.8 | 2.2 |
| PP melting temperature (°C) | 161.3 | 162.1 | 159.1 |
| PP melting enthalpy (J/g) | 109.9 | 112.3 | 101.6 |
| Percentage of PE melting enthalpy (%) | 2.0 | 1.5 | 2.1 |
| Oxidation induction temperature (°C) | 209.5 | 211.6 | 217.3 |

The commercially available virgin heterophasic propylene copolymer (Borealis HECO BA2000) had a MFR₂ of 0.23 g/10min; a Young's modulus of 1850 MPa, and Charpy NIS (23°C) of 33 kJ/m², a total amount of ethylene of 1.35 wt.-% and an amount of 5.6 wt.-% CRYSTEX soluble fraction. An overview is given in Table 2.

**Table 2: properties of virgin heterophasic propylene copolymer**

| | Virgin heterophasic propylene copolymer |
|---|---|
| MFR (230 °C/2.16 kg) [g/10min] | 0.23 |
| Young's Modulus [MPa] | 1850 |
| Charpy NIS [kJ/m²] 23°C | 33 |
| Crystex_C2 (wt.-%) | 1.35 |
| Crystex_C2 crystalline fraction (wt.-%) | 0.3 |
| Crystex_C2 soluble fraction (wt.-%) | 19.0 |
| Crystex crystalline fraction (CF) (wt.-%) | 94.4 |
| Crystex_IV (dL/g) | 4.05 |
| Crystex_IV crystalline fraction (dL/g) | 4.02 |
| Crystex_IV soluble fraction (dL/g) | 3.54 |
| Crystex_soluble fraction (SF) (wt.-%) | 5.6 |

The commercially available polypropylene-polyethylene blends (A) #1 to #3 were blended with said commercially available virgin heterophasic propylene copolymer, whereby all blends were compounded with 0.15 wt.-% Irganox 1010 and 0.15 wt.-% Irgafos 168. Table 3 reports the amounts used for the compositions.

**Table 3: Overview of compositions**

| | IE1 | IE2 | IE3 | IE4 | IE5 | CE |
|---|---|---|---|---|---|---|
| Virgin heterophasic propylene copolymer (wt.-%) | 49.85 | 39.88 | 44.86 | 39.88 | 34.90 | 44.86 |
| polypropylene-polyethylene blend (A) #1 (wt.-%) | 49.85 | 59.82 | | | | |
| polypropylene-polyethylene blend (A) #2(wt.-%) | | | 54.84 | 59.82 | 64.8 | |
| polypropylene-polyethylene blend (A) #3 (wt.-%) | | | | | | 54.84 |
| Irganox 1010 (wt.-%) | 0.15 | 0.15 | 0.15 | 0.15 | 0.15 | 0.15 |
| Irgafos 168 (wt.-%) | 0.15 | 0.15 | 0.15 | 0.15 | 0.15 | 0.15 |

Table 4 reports parameters as measured on the resulting compositions.

**Table 4: Overview of compositions as obtained**

| | IE1 | IE2 | IE3 | IE4 | IE5 | CE |
|---|---|---|---|---|---|---|
| MFR (230°C/2.16 kg) | 1.8 | 3.3 | 1.9 | 2.1 | 3.2 | 2.4 |
| Charpy NIS (kJ/m²) | 7.7 | 7.7 | 8.0 | 7.7 | 6.8 | |
| Tensile Modulus (MPa) | 1540 | 1420 | 1590 | 1550 | 1520 | 1340 |
| Crystex_C2 (wt.-%) | 4.92 | 5.81 | 4.46 | 4.85 | 4.98 | 4.4 |
| Crystex_C2 crystalline fraction (wt.-%) | 3.85 | 4.66 | 3.13 | 3.31 | 3.52 | 3.97 |
| Crystex_C2 soluble fraction (wt.-%) | 20.24 | 21.51 | 23.42 | 23.29 | 24.38 | 17.67 |
| Crystex crystalline fraction (CF) (wt.-%) | 92.3 | 91.89 | 91.65 | 91.43 | 90.96 | 92.98 |
| Crystex_IV (dL/g) | 2.83 | 2.58 | 2.82 | 2.72 | 2.55 | 2.7 |
| Crystex_IV crystalline fraction (dL/g) | 2.82 | 2.58 | 2.81 | 2.71 | 2.54 | 2.7 |
| Crystex_IV soluble fraction (dL/g) | 2.04 | 1.90 | 2.14 | 2.09 | 2.0 | 1.7 |
| Crystex_soluble fraction (SF) (wt.-%) | 7.7 | 8.11 | 8.35 | 8.57 | 9.04 | 7.02 |
| HDT (°C, B 0.45 MPa) | 96.9 | 94.5 | 100.5 | 99.4 | 97.1 | 93.2 |
| Vicat (°C, A50) | 152.8 | 150.7 | 153.5 | 153.4 | 151.6 | 149.3 |
| PE melting temperature (°C) | 124.6 | 124.2 | 124.7 | 124.6 | 124.8 | 125.1 |
| PE melting enthalpy (J/g) | 0.9 | 1.1 | 0.7 | 0.7 | 0.7 | 1.0 |
| PP melting temperature (°C) | 165.0 | 163.7 | 165.1 | 164.7 | 164.5 | 163.5 |
| PP melting enthalpy (J/g) | 98.6 | 91.6 | 95.9 | 89.3 | 87.8 | 94.3 |
| Percentage of PE melting enthalpy (%) | 0.9 | 1.2 | 0.7 | 0.8 | 0.8 | 1.1 |
| Oxidation induction temperature (°C) | 265.2 | 257.6 | 260.1 | 257.8 | 250.6 | 264.2 |
| | | | | | | |

It can be seen that surprisingly high Vicat and particularly high HDT values were obtained for the inventive compositions. Examples IE1, IE3, IE4, and IE5 further showed excellent tensile moduli.

## Claims

1. A polypropylene-polyethylene composition having
- a melt flow rate MFR2 (230°C, ISO1133) of 1.5 to 4.0 g/10min, and
- a tensile modulus of at least 1300 MPa, (measured according to ISO 527-2); and
- a crystalline fraction (CF) measured according to Crystex analysis as described in the specification , present in an amount in the range from 90.8 to 93.5 wt.-% with respect to the total weight of the polypropylene-polyethylene composition; and
- a soluble fraction (SF) measured according to Crystex analysis as described in the specification, present in an amount in the range from 6.5 to 9.2 wt.-% with respect to the total weight of the polypropylene-polyethylene composition; and
- an intrinsic viscosity of the crystalline fraction [IV(CF)], measured according to Crystex analysis as described in the specification, in the range from 2.3 to 2.9 dl/g; and
- an intrinsic viscosity of the soluble fraction [IV(SF)], measured according to Crystex analysis as described in the specification of 1.80 to 2.40 dl/g; and
- a content of units derived from ethylene in the crystalline fraction [C2(CF)] measured according to Crystex analysis as described in the specification in the range of 3.0 to 4.8 wt.%,
whereby said polypropylene-polyethylene composition contains a recyclate fraction.

2. The polypropylene-polyethylene composition according to claim 1 having a content of units derived from ethylene in the soluble fraction [C2(SF)] measured according to Crystex analysis as described in the specification of 18.0 to 26.0 wt.%.

3. The polypropylene-polyethylene composition according to claim 1 or 2 having one or more of the following:
(i) a content of limonene as determined by using solid phase microextraction (HS-SPME-GC-MS) of from 0.1 ppm to 100 ppm,
(ii) a content of fatty acid(s) as determined by using solid phase microextraction (HS-SPME-GC-MS) of 0.1 to 100 ppm
(iii) a content of polyamide(s) as determined by IR of 0.001 to 0.5 wt.-%;
(iv) a content of polystyrene(s) as determined by IR of 0.05 to 0.8 wt.-%;
(v) a content of talc as determined by FTIR of 0.01 to 0.5 wt.-%;
(vi) a content of chalk as determined by FTIR of 0.01 to 0.5 wt.-%.

4. The polypropylene-polyethylene composition according to any one of the preceding claims, whereby said polypropylene-polyethylene composition has
- a tensile modulus of at least 1500 MPa, (measured according to ISO 527-2); and
- an intrinsic viscosity of the soluble fraction [IV(SF)], measured according to Crystex analysis as described in the specification of 1.95 dl/g to 2.40 dl/g; and
- a content of units derived from ethylene in the crystalline fraction [C2(CF)] measured according to Crystex analysis as described in the specification in the range of 3.0 to 3.9 wt.-%.

5. The polypropylene-polyethylene composition according to any one of the preceding claims, whereby said polypropylene-polyethylene composition has
- a content of units derived from ethylene in the soluble fraction [C2(SF)] measured according to Crystex analysis as described in the specification of 22.0 to 26.0 wt.-%.

6. The polypropylene-polyethylene composition according to claim 1 obtainable by blending
a) 39 to 70 wt.-%, preferably 49 to 70 wt.-% of a recycled polypropylene-polyethylene blend (A) having
- a crystalline fraction (CF) measured according to Crystex analysis as described in the specification, present in an amount in the range from 89.0 to 92.0 wt.-% with respect to the total weight of the recycled polypropylene-polyethylene blend (A); and
- a soluble fraction (SF) measured according to Crystex analysis as described in the specification, present in an amount in the range from 8.0 to 11.0 wt.-% with respect to the total weight of the recycled polypropylene-polyethylene blend (A); and
- an intrinsic viscosity of the crystalline fraction [IV(CF)], measured according to Crystex analysis as described in the specification, in the range from 1.50 to 1.80 dl/g; and
- an intrinsic viscosity of the soluble fraction [IV(SF)], measured according to Crystex analysis as described in the specification of 0.80 dl/g to 1.80 dl/g; and
- a content of units derived from ethylene in the crystalline fraction [C2(CF)] measured according to Crystex analysis as described in the specification in the range of 4.0 to 8.0 wt.%, and optionally
- a percentage of polyethylene melting enthalpy of lower than 2.5 %, preferably lower than 2.1 %;
with
b) 30 to 61 wt.-%, preferably 30 to 51 wt.-% of a virgin heterophasic propylene copolymer having
- a melt flow rate MFR₂ (230°C, ISO1133) of 0.15 to 0.35 g/10min, and
- Young's modulus of at least 1800 MPa determined in tensile testing according to ISO 527-2 on injection molded multi-purpose specimens prepared in accordance with ISO 527-1, and
- a content of soluble fraction (SF), measured according to Crystex analysis as described in the specification, within the range from 3.0 to 8.0 wt.-%, and based on the total weight of the virgin heterophasic propylene copolymer; and
- a total ethylene (C2) content, measured according to Crystex analysis as described in the specification, from 0.5 to 3.0 wt.-%,
all amounts with respect to the final polypropylene-polyethylene composition.

7. The polypropylene-polyethylene composition according to claim 6, wherein said virgin heterophasic propylene copolymer has a Charpy notched impact strength (1eA) (non-instrumented, ISO 179-1 at +23 °C) of at least 27 kJ/m².

8. The polypropylene-polyethylene composition according to any one of claims 5 to 7, wherein the virgin heterophasic propylene copolymer has an intrinsic viscosity of the soluble fraction [IV(SF)], measured according to Crystex analysis as described in the specification in the range of 3.2 to 3.9 dl/g.

9. The polypropylene-polyethylene composition according to any one of claims 5 to 8, wherein the virgin heterophasic propylene copolymer has a content of soluble fraction (SF), measured according to Crystex analysis as described in the specification, within the range from 4.0 to 7.0 wt.-%, and based on the total weight of the virgin heterophasic propylene copolymer.

10. The polypropylene-polyethylene composition according to claim 4 obtainable by blending
a) 39 to 70 wt.-%, preferably 49 to 70 wt.-% of a recycled polypropylene-polyethylene blend (A) having
- a crystalline fraction (CF) measured according to Crystex analysis as described in the specification, present in an amount in the range from 89.0 to 90.7 wt.-% with respect to the total weight of the recycled polypropylene-polyethylene blend (A); and
- a soluble fraction (SF) measured according to Crystex analysis as described in the specification, present in an amount in the range from 9.3 to 11.0 wt.-% with respect to the total weight of the recycled polypropylene-polyethylene blend (A); and
- an intrinsic viscosity of the soluble fraction [IV(SF)], measured according to Crystex analysis as described in the specification of 1.60 dl/g to 1.80 dl/g; and
- a content of units derived from ethylene in the crystalline fraction [C2(CF)] measured according to Crystex analysis as described in the specification in the range of 4.0 to 4.7 wt.%, and
- optionally a percentage of polyethylene melting enthalpy of lower than 2.5 %, preferably lower than 2.1 %;
with
b) 30 to 61 wt.-%, preferably 30 to 51 wt.-% of a virgin heterophasic propylene copolymer having
- a melt flow rate MFR₂ (230°C, ISO1133) of 0.15 to 0.35 g/10min, and
- Young's modulus of at least 1800 MPa determined in tensile testing according to ISO 527-2 on injection molded multi-purpose specimens prepared in accordance with ISO 527-1; and
a Charpy notched impact strength (1eA) (non-instrumented, ISO 179-1 at +23 °C) of at least 27 kJ/m², and
- a content of soluble fraction (SF), measured according to Crystex analysis as described in the specification, within the range from 3.0 to 8.0 wt.-%, and based on the total weight of the virgin heterophasic propylene copolymer; and
- a total ethylene (C2) content, measured according to Crystex analysis as described in the specification, from 0.5 to 3.0 wt.-% based on the total weight of the virgin heterophasic propylene copolymer;
all amounts with respect to the final polypropylene-polyethylene composition.

11. Process for obtaining a polypropylene-polyethylene composition according to claim 1 comprising the step of blending
a) 39 to 70 wt.-%, preferably 49 to 70 wt.-% of a recycled polypropylene-polyethylene blend (A) having
- a crystalline fraction (CF) measured according to Crystex analysis as described in the specification, present in an amount in the range from 89.0 to 92.0 wt.-% with respect to the total weight of the recycled polypropylene-polyethylene blend (A); and
- a soluble fraction (SF) measured according to Crystex analysis as described in the specification, present in an amount in the range from 8.0 to 11.0 wt.-% with respect to the total weight of the recycled polypropylene-polyethylene blend (A); and
- an intrinsic viscosity of the crystalline fraction [IV(CF)], measured according to Crystex analysis as described in the specification, in the range from 1.50 to 1.80 dl/g; and
- an intrinsic viscosity of the soluble fraction [IV(SF)], measured according to Crystex analysis as described in the specification; and
- a content of units derived from ethylene in the crystalline fraction [C2(CF)] measured according to Crystex analysis as described in the specification in the range of 4.0 to 8.0 wt.%,
with
b) 30 to 61 wt.-%, preferably 30 to 51 wt.-% of a virgin heterophasic propylene copolymer having
- a melt flow rate MFR₂ (230°C, ISO1133) of 0.15 to 0.35 g/10min, and
- Young's modulus of at least 1800 MPa determined in tensile testing according to ISO 527-2 on injection molded multi-purpose specimens prepared in accordance with ISO 527-1; and
- a content of soluble fraction (SF), measured according to Crystex analysis as described in the specification, within the range from 3.0 to 8.0 wt.-%, and based on the total weight of the virgin heterophasic propylene copolymer; and
- a total ethylene (C2) content, measured according to Crystex analysis as described in the specification, from 0.5 to 3.0 wt.-% based on the total weight of the virgin heterophasic propylene copolymer;
all amounts with respect to the final resulting polypropylene-polyethylene composition.

12. Process according to claim 11, whereby said virgin heterophasic propylene copolymer has a Charpy notched impact strength (1eA) (non-instrumented, ISO 179-1 at +23 °C) of at least 27 kJ/m².

13. Thermoformed article made from a polypropylene-polyethylene composition according to any one of claims 1 to 10.

14. Thermoformed article made from a polypropylene-polyethylene composition according to any one of claims 1 to 10 containing the polypropylene-polyethylene composition in an amount of at least 97.0 wt.-% with respect to the article.

15. Thermoformed article made from a polypropylene-polyethylene composition according to claim 14, wherein the polypropylene-polyethylene composition is present in an amount of at least 98.5 wt.-% with respect to the article.

## Patentansprüche

1. Eine Polypropylen-Polyethylen-Zusammensetzung mit
- einer Schmelzflussrate MFR2 (230 °C, ISO 1133) von 1,5 bis 4,0 g/10 min und
- einem Zugmodul von mindestens 1300 MPa (gemessen gemäß ISO 527-2); und
- einer kristallinen Fraktion (CF), gemessen gemäß der in der Beschreibung beschriebenen Crystex-Analyse, die in einer Menge im Bereich von 90,8 bis 93,5 Gew.-%, bezogen auf das Gesamtgewicht der Polypropylen-Polyethylen-Zusammensetzung, vorliegt; und
- einer löslichen Fraktion (SF), gemessen gemäß der in der Beschreibung beschriebenen Crystex-Analyse, die in einer Menge im Bereich von 6,5 bis 9,2 Gew.-%, bezogen auf das Gesamtgewicht der Polypropylen-Polyethylen-Zusammensetzung, vorliegt; und
- eine intrinsische Viskosität der kristallinen Fraktion [IV(CF)], gemessen gemäß der in der Beschreibung beschriebenen Crystex-Analyse, im Bereich von 2,3 bis 2,9 dl/g; und
- eine intrinsische Viskosität der löslichen Fraktion [IV(SF)], gemessen gemäß der in der Beschreibung beschriebenen Crystex-Analyse, von 1,80 bis 2,40 dl/g; und
- einen Gehalt an von Ethylen abgeleiteten Einheiten in der kristallinen Fraktion [C2(CF)], gemessen gemäß der in der Beschreibung beschriebenen Crystex-Analyse, im Bereich von 3,0 bis 4,8 Gew.-%,
wobei die Polypropylen-Polyethylen-Zusammensetzung eine Rezyklat-Fraktion enthält.

2. Die Polypropylen-Polyethylen-Zusammensetzung nach Anspruch 1, die einen Gehalt an von Ethylen abgeleiteten Einheiten in der löslichen Fraktion [C2(SF)] aufweist, der gemäß der in der Beschreibung beschriebenen Crystex-Analyse gemessen wurde und im Bereich von 18,0 bis 26,0 Gew.-% liegt.

3. Die Polypropylen-Polyethylen-Zusammensetzung nach Anspruch 1 oder 2, die eines oder mehrere der folgenden Merkmale aufweist:
(i) einen Gehalt an Limonen, bestimmt mittels Festphasen-Mikroextraktion (HS-SPME-GC-MS), von 0,1 ppm bis 100 ppm,
(ii) einen Gehalt an Fettsäure(n), bestimmt mittels Festphasen-Mikroextraktion (HS-SPME-GC-MS), von 0,1 bis 100 ppm
(iii) einen Gehalt an Polyamid(en), bestimmt mittels IR, von 0,001 bis 0,5 Gew.-%;
(iv) einen Gehalt an Polystyrol(en), bestimmt mittels IR, von 0,05 bis 0,8 Gew.-%;
(v) einen Gehalt an Talk, bestimmt mittels FTIR, von 0,01 bis 0,5 Gew.-%;
(vi) einen Gehalt an Kreide, bestimmt mittels FTIR, von 0,01 bis 0,5 Gew.-%.

4. Die Polypropylen-Polyethylen-Zusammensetzung gemäß einem der vorstehenden Ansprüche, wobei die Polypropylen-Polyethylen-Zusammensetzung aufweist:
- ein Zugmodul von mindestens 1500 MPa (gemessen gemäß ISO 527-2); und
- eine intrinsische Viskosität der löslichen Fraktion [IV(SF)], gemessen gemäß der in der Spezifikation beschriebenen Crystex-Analyse, von 1,95 dl/g bis 2,40 dl/g; und
- einen Gehalt an von Ethylen abgeleiteten Einheiten in der kristallinen Fraktion [C2(CF)], gemessen gemäß der in der Beschreibung beschriebenen Crystex-Analyse, im Bereich von 3,0 bis 3,9 Gew.-%.

5. Die Polypropylen-Polyethylen-Zusammensetzung gemäß einem der vorstehenden Ansprüche, wobei die Polypropylen-Polyethylen-Zusammensetzung aufweist:
- einen Gehalt an von Ethylen abgeleiteten Einheiten in der löslichen Fraktion [C2(SF)], gemessen gemäß der in der Beschreibung beschriebenen Crystex-Analyse, von 22,0 bis 26,0 Gew.-%.

6. Die Polypropylen-Polyethylen-Zusammensetzung nach Anspruch 1, erhältlich durch Mischen von
a) 39 bis 70 Gew.-%, vorzugsweise 49 bis 70 Gew.-%, einer recycelten Polypropylen-Polyethylen-Mischung (A) mit
- einer kristallinen Fraktion (CF), gemessen gemäß der in der Beschreibung beschriebenen Crystex-Analyse, die in einer Menge im Bereich von 89,0 bis 92,0 Gew.-%, bezogen auf das Gesamtgewicht der recycelten Polypropylen-Polyethylen-Mischung (A), vorliegt; und
- einer löslichen Fraktion (SF), gemessen gemäß der in der Beschreibung beschriebenen Crystex-Analyse, die in einer Menge im Bereich von 8,0 bis 11,0 Gew.-%, bezogen auf das Gesamtgewicht des recycelten Polypropylen-Polyethylen-Gemischs (A),; und
- eine intrinsische Viskosität der kristallinen Fraktion [IV(CF)], gemessen gemäß der in der Beschreibung beschriebenen Crystex-Analyse, im Bereich von 1,50 bis 1,80 dl/g; und
- eine intrinsische Viskosität der löslichen Fraktion [IV(SF)], gemessen gemäß der in der Beschreibung beschriebenen Crystex-Analyse, von 0,80 dl/g bis 1,80 dl/g; und
- einen Gehalt an von Ethylen abgeleiteten Einheiten in der kristallinen Fraktion [C2(CF)], gemessen gemäß der in der Beschreibung beschriebenen Crystex-Analyse, im Bereich von 4,0 bis 8,0 Gew.-%, und gegebenenfalls
- einen Anteil der Polyethylen-Schmelzenthalpie von weniger als 2,5 %, vorzugsweise weniger als 2,1 %;
mit
b) 30 bis 61 Gew.-%, vorzugsweise 30 bis 51 Gew.-%, eines reinen heterophasischen Propylen-Copolymers mit
- einer Schmelzflussrate MFR₂ (230 °C, ISO 1133) von 0,15 bis 0,35 g/10 min, und
- einem Elastizitätsmodul von mindestens 1800 MPa, bestimmt im Zugversuch gemäß ISO 527-2 an spritzgegossenen Mehrzweckproben, die gemäß ISO 527-1 hergestellt wurden, und
- einem Gehalt an löslicher Fraktion (SF), gemessen gemäß der in der Spezifikation beschriebenen Crystex-Analyse, im Bereich von 3,0 bis 8,0 Gew.-%, bezogen auf das Gesamtgewicht des reinen heterophasischen Propylen-Copolymers; und
- einem Gesamtgehalt an Ethylen (C₂), gemessen gemäß der in der Spezifikation beschriebenen Crystex-Analyse, von 0,5 bis 3,0 Gew.-%,
wobei sich alle Mengenangaben auf die endgültige Polypropylen-Polyethylen-Zusammensetzung beziehen.

7. Die Polypropylen-Polyethylen-Zusammensetzung nach Anspruch 6, wobei das reine heterophasische Propylen-Copolymer eine Charpy-Kerbschlagzähigkeit (1eA) (ohne Messvorrichtung, ISO 179-1 bei +23 °C) von mindestens 27 kJ/m² aufweist.

8. Die Polypropylen-Polyethylen-Zusammensetzung nach einem der Ansprüche 5 bis 7, wobei das reine heterophasische Propylen-Copolymer eine intrinsische Viskosität der löslichen Fraktion [IV(SF)] aufweist, gemessen gemäß der in der Beschreibung beschriebenen Crystex-Analyse, im Bereich von 3,2 bis 3,9 dl/g.

9. Die Polypropylen-Polyethylen-Zusammensetzung gemäß einem der Ansprüche 5 bis 8, wobei das reine heterophasische Propylen-Copolymer einen Gehalt an löslicher Fraktion (SF), gemessen gemäß der in der Beschreibung beschriebenen Crystex-Analyse, im Bereich von 4,0 bis 7,0 Gew.-%, bezogen auf das Gesamtgewicht des reinen heterophasischen Propylen-Copolymers, aufweist.

10. Die Polypropylen-Polyethylen-Zusammensetzung gemäß Anspruch 4, erhältlich durch Mischen von
a) 39 bis 70 Gew.-%, vorzugsweise 49 bis 70 Gew.-%, einer recycelten Polypropylen-Polyethylen-Mischung (A) mit
- einer kristallinen Fraktion (CF), gemessen gemäß der in der Beschreibung beschriebenen Crystex-Analyse, die in einer Menge im Bereich von 89,0 bis 90,7 Gew.-%, bezogen auf das Gesamtgewicht des recycelten Polypropylen-Polyethylen-Gemischs (A), vorliegt; und
- einer löslichen Fraktion (SF), gemessen gemäß der in der Beschreibung beschriebenen Crystex-Analyse, die in einer Menge im Bereich von 9,3 bis 11,0 Gew.-%, bezogen auf das Gesamtgewicht des recycelten Polypropylen-Polyethylen-Gemischs (A), vorliegt; und
- einer intrinsischen Viskosität der löslichen Fraktion [IV(SF)], gemessen gemäß der in der Beschreibung beschriebenen Crystex-Analyse, von 1,60 dl/g bis 1,80 dl/g; und
- einem Gehalt an von Ethylen abgeleiteten Einheiten in der kristallinen Fraktion [C2(CF)], gemessen gemäß der in der Beschreibung beschriebenen Crystex-Analyse, im Bereich von 4,0 bis 4,7 Gew.-%, und
- optional einem Anteil der Polyethylen-Schmelzenthalpie von weniger als 2,5 %, vorzugsweise weniger als 2,1 %;
mit
b) 30 bis 61 Gew.-%, vorzugsweise 30 bis 51 Gew.-%, eines reinen heterophasischen Propylen-Copolymers mit
- einer Schmelzflussrate MFR₂ (230 °C, ISO 1133) von 0,15 bis 0,35 g/10 min und
- einem Elastizitätsmodul von mindestens 1800 MPa, bestimmt im Zugversuch gemäß ISO 527-2 an spritzgegossenen Mehrzweckproben, die gemäß ISO 527-1 hergestellt wurden; und
eine Charpy-Kerbschlagzähigkeit (1eA) (ohne Messvorrichtung, ISO 179-1 bei +23 °C) von mindestens 27 kJ/m² sowie
- ein Gehalt an löslicher Fraktion (SF), gemessen gemäß der in der Spezifikation beschriebenen Crystex-Analyse, im Bereich von 3,0 bis 8,0 Gew.-%, bezogen auf das Gesamtgewicht des reinen heterophasischen Propylen-Copolymers; und
- einen Gesamtgehalt an Ethylen (C2), gemessen gemäß der in der Spezifikation beschriebenen Crystex-Analyse, von 0,5 bis 3,0 Gew.-%, bezogen auf das Gesamtgewicht des reinen heterophasischen Propylen-Copolymers; wobei sich alle Mengenangaben auf die endgültige Polypropylen-Polyethylen-Zusammensetzung beziehen.

11. Verfahren zur Herstellung einer Polypropylen-Polyethylen-Zusammensetzung nach Anspruch 1, umfassend den Schritt des Vermischens
a) 39 bis 70 Gew.-%, vorzugsweise 49 bis 70 Gew.-%, einer recycelten Polypropylen-Polyethylen-Mischung (A) mit
- einer kristallinen Fraktion (CF), gemessen gemäß der in der Beschreibung beschriebenen Crystex-Analyse, die in einer Menge im Bereich von 89,0 bis 92,0 Gew.-%, bezogen auf das Gesamtgewicht der recycelten Polypropylen-Polyethylen-Mischung (A), vorliegt; und
- einer löslichen Fraktion (SF), gemessen gemäß der in der Beschreibung beschriebenen Crystex-Analyse, die in einer Menge im Bereich von 8,0 bis 11,0 Gew.-%, bezogen auf das Gesamtgewicht des recycelten Polypropylen-Polyethylen-Gemischs (A), vorliegt; und
- einer intrinsischen Viskosität der kristallinen Fraktion [IV(CF)], gemessen gemäß der in der Beschreibung beschriebenen Crystex-Analyse, im Bereich von 1,50 bis 1,80 dl/g; und
- einer intrinsischen Viskosität der löslichen Fraktion [IV(SF)], gemessen gemäß der Crystex-Analyse, wie in der Beschreibung beschrieben; und
- einem Gehalt an von Ethylen abgeleiteten Einheiten in der kristallinen Fraktion [C2(CF)], gemessen gemäß der in der Beschreibung beschriebenen Crystex-Analyse, im Bereich von 4,0 bis 8,0 Gew.-%,
mit
b) 30 bis 61 Gew.-%, vorzugsweise 30 bis 51 Gew.-%, eines reinen heterophasischen Propylen-Copolymers mit
- einer Schmelzflussrate MFR₂ (230 °C, ISO 1133) von 0,15 bis 0,35 g/10 min und
- einem Elastizitätsmodul von mindestens 1800 MPa, bestimmt im Zugversuch gemäß ISO 527-2 an spritzgegossenen Mehrzweckproben, die gemäß ISO 527-1 hergestellt wurden; und
- einem Gehalt an löslicher Fraktion (SF), gemessen gemäß der in der Beschreibung beschriebenen Crystex-Analyse, im Bereich von 3,0 bis 8,0 Gew.-%, bezogen auf das Gesamtgewicht des reinen heterophasischen Propylen-Copolymers; und
- einem Gesamtgehalt an Ethylen (C₂), gemessen gemäß der in der Spezifikation beschriebenen Crystex-Analyse, von 0,5 bis 3,0 Gew.-%, bezogen auf das Gesamtgewicht des reinen heterophasischen Propylen-Copolymers; wobei sich alle Mengenangaben auf die letztendlich erhaltene Polypropylen-Polyethylen-Zusammensetzung beziehen.

12. Verfahren nach Anspruch 11, wobei das genannte reine heterophasische Propylen-Copolymer eine Charpy-Kerbschlagzähigkeit (1eA) (ohne Messvorrichtung, ISO 179-1 bei +23 °C) von mindestens 27 kJ/m² aufweist.

13. Thermogeformter Gegenstand, hergestellt aus einer Polypropylen-Polyethylen-Zusammensetzung gemäß einem der Ansprüche 1 bis 10.

14. Thermogeformter Gegenstand, hergestellt aus einer Polypropylen-Polyethylen-Zusammensetzung gemäß einem der Ansprüche 1 bis 10, der die Polypropylen-Polyethylen-Zusammensetzung in einer Menge von mindestens 97,0 Gew.-%, bezogen auf den Gegenstand, enthält.

15. Thermogeformter Gegenstand aus einer Polypropylen-Polyethylen-Zusammensetzung gemäß Anspruch 14, wobei die Polypropylen-Polyethylen-Zusammensetzung in einer Menge von mindestens 98,5 Gew.-%, bezogen auf den Gegenstand, vorliegt.

## Revendications

1. Composition de polypropylène-polyéthylène présentant
- un indice de fluidité à chaud MFR2 (230 °C, ISO1133) de 1,5 à 4,0 g/10 min, et
- un module de traction d'au moins 1300 MPa, (mesuré selon l'ISO 527-2) ; et
- une fraction cristalline (CF), mesurée selon l'analyse Crystex telle que décrite dans la description de brevet, présente en une quantité dans la plage de 90,8 à 93,5 % en poids par rapport au poids total de la composition de polypropylène-polyéthylène ; et
- une fraction soluble (SF), mesurée selon l'analyse Crystex telle que décrite dans la description de brevet, présente en une quantité dans la plage de 6,5 à 9,2 % en poids par rapport au poids total de la composition de polypropylène-polyéthylène ; et
- une viscosité intrinsèque de la fraction cristalline [IV(CF)], mesurée selon l'analyse Crystex telle que décrite dans la description de brevet, dans la plage de 2,3 à 2,9 dl/g ; et
- une viscosité intrinsèque de la fraction soluble [IV(SF)], mesurée selon l'analyse Crystex telle que décrite dans la description de brevet, de 1,80 à 2,40 dl/g ; et
- une teneur en motifs dérivés de l'éthylène dans la fraction cristalline [C2(CF)], mesurée selon l'analyse Crystex telle que décrite dans la description de brevet, dans la plage de 3,0 à 4,8 % en poids,
selon laquelle ladite composition de polypropylène-polyéthylène contient une fraction de recyclat.

2. Composition de polypropylène-polyéthylène selon la revendication 1, présentant une teneur en motifs dérivés de l'éthylène dans la fraction soluble [C2(SF)], mesurée selon l'analyse Crystex telle que décrite dans la description de brevet, de 18,0 à 26,0 % en poids.

3. Composition de polypropylène-polyéthylène selon la revendication 1 ou 2, présentant une ou plusieurs des caractéristiques suivantes :
(i) une teneur en limonène, telle que déterminée par microextraction en phase solide (HS-SPME-GC-MS), de 0,1 ppm à 100 ppm,
(ii) une teneur en acide(s) gras, telle que déterminée par microextraction en phase solide (HS-SPME-GC-MS), de 0,1 ppm à 100 ppm
(iii) une teneur en polyamide(s), telle que déterminée par IR, de 0,001 à 0,5 % en poids ;
(iv) une teneur en polystyrène(s), telle que déterminée par IR, de 0,05 à 0,8 % en poids ;
(v) une teneur en talc, telle que déterminée par FTIR, de 0,01 à 0,5 % en poids ;
(vi) une teneur en craie, telle que déterminée par FTIR, de 0,01 à 0,5 % en poids.

4. Composition de polypropylène-polyéthylène selon l'une des revendications précédentes, dans laquelle ladite composition de polypropylène-polyéthylène présente
- un module de traction d'au moins 1500 MPa, (mesuré selon l'ISO 527-2) ; et
- une viscosité intrinsèque de la fraction soluble [IV(SF)], mesurée selon l'analyse Crystex telle que décrite dans la description de brevet, de 1,95 dl/g à 2,40 dl/g ; et
- une teneur en motifs dérivés de l'éthylène dans la fraction cristalline [C2(CF)], mesurée selon l'analyse Crystex telle que décrite dans la description de brevet, dans la plage de 3,0 à 3,9 % en poids.

5. Composition de polypropylène-polyéthylène selon l'une des revendications précédentes, dans laquelle ladite composition de polypropylène-polyéthylène présente
- une teneur en motifs dérivés de l'éthylène dans la fraction soluble [C2(SF)], mesurée selon l'analyse Crystex telle que décrite dans la description de brevet, de 22,0 à 26,0 % en poids.

6. Composition de polypropylène-polyéthylène selon la revendication 1, pouvant être obtenue par le mélange de
a) 39 à 70 % en poids, de préférence 49 à 70 % en poids d'un mélange polypropylène-polyéthylène recyclé (A) présentant
- une fraction cristalline (CF), mesurée selon l'analyse Crystex telle que décrite dans la description de brevet, présente en une quantité dans la plage de 89,0 à 92,0 % en poids par rapport au poids total du mélange polypropylène-polyéthylène recyclé (A) ; et
- une fraction soluble (SF), mesurée selon l'analyse Crystex telle que décrite dans la description de brevet, présente en une quantité dans la plage de 8,0 à 11,0 % en poids par rapport au poids total du mélange polypropylène-polyéthylène recyclé (A) ; et
- une viscosité intrinsèque de la fraction cristalline [IV(CF)], mesurée selon l'analyse Crystex telle que décrite dans la description de brevet, dans la plage de 1,50 à 1,80 dl/g ; et
- une viscosité intrinsèque de la fraction soluble [IV(SF)], mesurée selon l'analyse Crystex telle que décrite dans la description de brevet, de 0,80 dl/g à 1,80 dl/g ; et
- une teneur en motifs dérivés de l'éthylène dans la fraction cristalline [C2(CF)], mesurée selon l'analyse Crystex telle que décrite dans la description de brevet, dans la plage de 4,0 à 8,0 % en poids, et optionnellement
- un pourcentage d'enthalpie de fusion du polyéthylène inférieur à 2,5 %, de préférence inférieur à 2,1 % ;
avec :
b) 30 à 61 % en poids, de préférence 30 à 51 % en poids, d'un copolymère hétérophasique de propylène vierge présentant
- un indice de fluidité à chaud MFR₂ (230 °C, ISO1133) de 0,15 à 0,35 g/10 min, et
- un module de Young d'au moins 1800 MPa, déterminé par essai de traction selon l'ISO 527-2 sur des éprouvettes à usages multiples moulées par injection préparées selon l'ISO 527-1, et
- une teneur en fraction soluble (SF), mesurée selon l'analyse Crystex telle que décrite dans la description de brevet, dans la plage de 3,0 à 8,0 % en poids, et sur la base du poids total du copolymère hétérophasique de propylène vierge ; et
- une teneur totale en éthylène (C2), mesurée selon l'analyse Crystex telle que décrite dans la description de brevet, de 0,5 à 3,0 % en poids,
toutes les quantités étant par rapport à la composition finale de polypropylène-polyéthylène.

7. Composition de polypropylène-polyéthylène selon la revendication 6, dans laquelle ledit copolymère hétérophasique de propylène vierge présente une résistance au choc Charpy sur éprouvette entaillée (1eA) (non instrumentée, ISO 179-1 à +23 °C) d'au moins 27 kJ/m².

8. Composition de polypropylène-polyéthylène selon l'une des revendications 5 à 7, dans laquelle le copolymère hétérophasique de propylène vierge présente une viscosité intrinsèque de la fraction soluble [IV(SF)], mesurée selon l'analyse Crystex telle que décrite dans la description de brevet, dans la plage de 3,2 à 3,9 dl/g.

9. Composition de polypropylène-polyéthylène selon l'une des revendications 5 à 8, dans laquelle le copolymère hétérophasique de propylène vierge présente une teneur en fraction soluble (SF), mesurée selon l'analyse Crystex telle que décrite dans la description de brevet, dans la plage de 4,0 à 7,0 % en poids, et sur la base du poids total du copolymère hétérophasique de propylène vierge.

10. Composition de polypropylène-polyéthylène selon la revendication 4, pouvant être obtenue par le mélange de
a) 39 à 70 % en poids, de préférence 49 à 70 % en poids d'un mélange polypropylène-polyéthylène recyclé (A) présentant
- une fraction cristalline (CF), mesurée selon l'analyse Crystex telle que décrite dans la description de brevet, présente en une quantité dans la plage de 89,0 à 90,7 % en poids par rapport au poids total du mélange polypropylène-polyéthylène recyclé (A) ; et
- une fraction soluble (SF), mesurée selon l'analyse Crystex telle que décrite dans la description de brevet, présente en une quantité dans la plage de 9,3 à 11,0 % en poids par rapport au poids total du mélange polypropylène-polyéthylène recyclé (A) ; et
- une viscosité intrinsèque de la fraction soluble [IV(SF)], mesurée selon l'analyse Crystex telle que décrite dans la description de brevet, de 1,60 dl/g à 1,80 dl/g ; et
- une teneur en motifs dérivés de l'éthylène dans la fraction cristalline [C2(CF)], mesurée selon l'analyse Crystex telle que décrite dans la description de brevet, dans la plage de 4,0 à 4,7 % en poids, et
- optionnellement un pourcentage d'enthalpie de fusion du polyéthylène inférieur à 2,5 %, de préférence inférieur à 2,1 % ;
avec :
b) 30 à 61 % en poids, de préférence 30 à 51 % en poids, d'un copolymère hétérophasique de propylène vierge présentant
- un indice de fluidité à chaud MFR₂ (230 °C, ISO1133) de 0,15 à 0,35 g/10 min, et
- un module de Young d'au moins 1800 MPa; déterminé par essai de traction selon l'ISO 527-2 sur des éprouvettes à usages multiples moulées par injection préparées selon l'ISO 527-1 ; et
- une résistance au choc Charpy sur éprouvette entaillée (1eA) (non instrumentée, ISO 179-1 à +23 °C) d'au moins 27 kJ/m² et
- une teneur en fraction soluble (SF), mesurée selon l'analyse Crystex telle que décrite dans la description de brevet, dans la plage de 3,0 à 8,0 % en poids, et sur la base du poids total du copolymère hétérophasique de propylène vierge ; et
- une teneur totale en éthylène (C2), mesurée selon l'analyse Crystex telle que décrite dans la description de brevet, de 0,5 à 3,0 % en poids sur la base du poids total du copolymère hétérophasique de propylène vierge ;
toutes les quantités étant par rapport à la composition finale de polypropylène-polyéthylène.

11. Procédé d'obtention d'une composition de polypropylène-polyéthylène selon la revendication 1, comprenant l'étape de mélange de
a) 39 à 70 % en poids, de préférence 49 à 70 % en poids d'un mélange polypropylène-polyéthylène recyclé (A) présentant
- une fraction cristalline (CF), mesurée selon l'analyse Crystex telle que décrite dans la description de brevet, présente en une quantité dans la plage de 89,0 à 92,0 % en poids par rapport au poids total du mélange polypropylène-polyéthylène recyclé (A) ; et
- une fraction soluble (SF), mesurée selon l'analyse Crystex telle que décrite dans la description de brevet, présente en une quantité dans la plage de 8,0 à 11,0 % en poids par rapport au poids total du mélange polypropylène-polyéthylène recyclé (A) ; et
- une viscosité intrinsèque de la fraction cristalline [IV(CF)], mesurée selon l'analyse Crystex telle que décrite dans la description de brevet, dans la plage de 1,50 à 1,80 dl/g ; et
- une viscosité intrinsèque de la fraction soluble [IV(SF)], mesurée selon l'analyse Crystex telle que décrite dans la description de brevet ; et
- une teneur en motifs dérivés de l'éthylène dans la fraction cristalline [C2(CF)], mesurée selon l'analyse Crystex telle que décrite dans la description de brevet, dans la plage de 4,0 à 8,0 % en poids,
avec :
b) 30 à 61 % en poids, de préférence 30 à 51 % en poids, d'un copolymère hétérophasique de propylène vierge présentant
- un indice de fluidité à chaud MFR₂ (230 °C, ISO1133) de 0,15 à 0,35 g/10 min, et
- un module de Young d'au moins 1800 MPa; déterminé par essai de traction selon l'ISO 527-2 sur des éprouvettes à usages multiples moulées par injection préparées selon l'ISO 527-1 ; et
- une teneur en fraction soluble (SF), mesurée selon l'analyse Crystex telle que décrite dans la description de brevet, dans la plage de 3,0 à 8,0 % en poids, et sur la base du poids total du copolymère hétérophasique de propylène vierge ; et
- une teneur totale en éthylène (C2), mesurée selon l'analyse Crystex telle que décrite dans la description de brevet, de 0,5 à 3,0 % en poids sur la base du poids total du copolymère hétérophasique de propylène vierge ;
toutes les quantités étant par rapport à la composition finale de polypropylène-polyéthylène résultante.

12. Procédé selon la revendication 11, dans lequel ledit copolymère hétérophasique de propylène vierge présente une résistance au choc Charpy sur éprouvette entaillée (1eA) (non instrumentée, ISO 179-1 à +23 °C) d'au moins 27 kJ/m².

13. Article thermoformé fabriqué à partir d'une composition de polypropylène-polyéthylène selon l'une des revendications 1 à 10.

14. Article thermoformé fabriqué à partir d'une composition de polypropylène-polyéthylène selon l'une des revendications 1 à 10, contenant la composition de polypropylène-polyéthylène en une quantité d'au moins 97,0 % en poids par rapport à l'article.

15. Article thermoformé fabriqué à partir d'une composition de polypropylène-polyéthylène selon la revendication 14, dans lequel la composition de polypropylène-polyéthylène est présente en une quantité d'au moins 98,5 % en poids par rapport à l'article.
